(19) Europäisches Patentamt
European Patent Office
Office européen des brevets

(11) Veröffentlichungsnummer: **0 239 764**
**A2**

(12) # EUROPÄISCHE PATENTANMELDUNG

(21) Anmeldenummer: **87102173.9**

(22) Anmeldetag: **16.02.87**

(51) Int. Cl.[4]: **C08L 83/10**,
//(C08L83/10,67:00)

(30) Priorität: **28.02.86 DE 3606475**

(43) Veröffentlichungstag der Anmeldung:
**07.10.87 Patentblatt 87/41**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Witman, Mark, Dr.**
**1856 Taper Drive**
**Pittsburgh Pennsylvania 15249(US)**
Erfinder: **Grigo, Ulrich, Dr.**
**Michelsheide 9**
**D-4152 Kempen 3(DE)**
Erfinder: **Nouvertné, Werner, Dr.**
**Scheibelrstrasse 95**
**D-4150 Krefeld(DE)**
Erfinder: **Paul, Winfried, Dr.**
**Bethelstrasse 22**
**D-4150 Krefeld 1(DE)**

(54) **Mischungen aus Polycarbonatpolysiloxan-Blockcokondensaten und thermoplastischen Polyestern, Verfahren zu ihrer Herstellung und ihre Verwendung zur Herstellung von Formkörpern.**

(57) Die Zähigkeit von Mischungen aus Polycarbonatpolysiloxanen und aromatischen Polyestern läßt sich dadurch erhöhen, daß man als aromatischen Polyester einen Sulfongruppen-haltigen Polyester einsetzt.

EP 0 239 764 A2

# Mischungen aus Polycarbonatpolysiloxan-Blockcokondensaten und thermoplastischen Polyestern, Verfahren zu ihrer Herstellung und ihre Verwendung zur Herstellung von Formkörpern

Die Erfindung betrifft thermoplastische Mischungen aus

A. aromatischen Polycarbonaten, die Polysiloxanblöcke einkondensiert enthalten,

B. Sulfongruppen-haltigen Polyestern und gegebenenfalls

C. kautschukelastischen Polymerisaten, ein Verfahren zur Herstellung dieser Mischungen in der Schmelze und ihre Verwendung zur Herstellung von Formkörpern, vornehmlich durch Spritzguß.

Polycarbonatpolysiloxan-Blockcokondensate sind bekannt (US-PS 3 189 662, 3 419 634). Sie werden als elastomer, zugfest, hydrolysestabil und mit guten elektrischen Eigenschaften versehen beschrieben und als Rohstoff für die Herstellung von Formkörpern und Folien empfohlen.

Aufgrund ihrer Eigenschaften sind Polycarbonatpolysiloxan-Blockcokondensate auch als Mischungskomponenten für Polyester wie Polyalkylenterephthalate empfohlen worden (US-PS 4 161 469, 4 161 498). Sie sollen - verglichen mit den reinen Polyestern - höhere Schlagzähigkeit und höhere Wärmestandfestigkeit besitzen. Will man die Zähigkeit dieser Mischungen weiter erhöhen, so kann man dies durch Zusatz von Kautschuk nur bis zu einem gewissen Grad erreichen, sofern man noch Wert auf glatte, einheitlich eingefärbte Oberflächen legt.

Wir haben nun gefunden, daß man die Zähigkeit dieser Mischungen u.a. dadurch erhöhen kann, daß man als Polyester Sulfongruppen-haltige Polyester einsetzt. Die mit dieser Maßnahme verbundene Zähigkeitsverbesserung ist insofern überraschend, als Sulfongruppen-haltige Polyester gegenüber Sulfongruppen-freien Polyestern keinen Zähigkeitsvorteil aufweisen.

Gegenstand der Erfindung sind thermoplastische Mischungen aus

A. 10 bis 98 Gew.-% Polycarbonatpolydiorganosiloxan-Blockcokondensat mit einer relativen Viskosität (gemessen an einer Lösung von 0,5 g Blockcokondensat in 100 ml Dichlormethan bei 25° C) von mindestens 1.15, vorzugsweise von 1.18 bis 1.32, und einem Gehalt von 2,5 bis 25, vorzugsweise von 5 bis 20, Gew.-%, bezogen auf Komponente A, Poly-(diorganosiloxan)-einheiten, wobei diese Poly-(diorganosiloxan)-einheiten im Mittel 5 bis 120, vorzugsweise 10 bis 100, Siliciumatome pro Einheit enthalten,

B. 2 bis 90 Gew.-% aromatischem Polyester mit einer Intrinsic-Viskosität (gemessen in Phenol/o-Dichlorbenzol (1:1 Gewichtsteile) bei 25° C) von mindestens 0,6 dl/g, vorzugsweise von 0,7 bis 1,3 dl/g, und

C. 0 bis 30 Gew.-% kautschukelastischem Polymerisat mit einer Glasübergangstemperatur von unter -20° C, wobei sich die Prozentangaben, wenn nicht anders angegeben, auf die Summe der Komponenten A und B beziehen, dadurch gekennzeichnet, daß die Polyesterkomponente B 0.5 bis 21, vorzugsweise 1.0 bis 17, insbesondere 1.0 bis 5.0 Gew.-%, bezogen auf B, Sulfongruppen enthält.

Bevorzugte Polycarbonatpolydiorganosiloxan-Blockcokondensate A enthalten Diorganosiloxaneinheiten der Formel

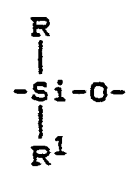

(I)

worin

R und $R^1$ unabhängig voneinander $C_1$-$C_{20}$-, vorzugsweise $C_1$-$C_6$-Alkyl, $C_6$-$C_{14}$-, vorzugsweise $C_6$-Aryl bedeuten, wobei die Alkyl-und Arylreste einmal bis vollständig durch Fluor, Chlor oder Brom substituiert sein können.

Bevorzugte Reste R und $R^1$ umfassen Ethyl, Propyl, n-und tert.-Butyl, Chlormethyl, Trifluorpropyl, Phenyl, Chlorphenyl, Naphthyl, insbesondere Methyl.

75 bis 97,5, vorzugsweise 80 bis 95 Gew.-% des Blockcokondensats A bestehen aus Carbonylgruppen, Diphenolresten, gegebenenfalls Resten von Verzweigungsmitteln und gegebenenfalls aus Endgruppen.

Bevorzugte Diphenolreste entsprechen beispielsweise den Formeln

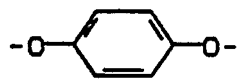 (II)

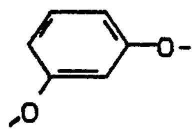 (III) und

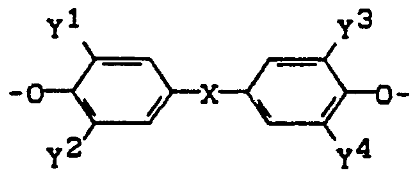 (IV)

worin
X eine Einfachbindung, $-CH_2-$,

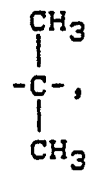, 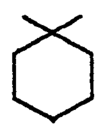,

-O-, -S-, $-SO_2-$oder

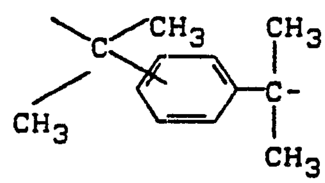

und
$Y^1$ bis $Y^4$ unabhängig voneinander Wasserstoff, $C_1$-$C_4$-Alkyl, vorzugsweise Methyl, oder Halogen, vorzugsweise Chlor oder Brom, bedeuten.

Bevorzugte Diphenolreste sind beispielsweise die Reste von
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Bevorzugte Verzweigungsmittel für die Blockcokondensate A sind mindestens trifunktionelle Verbindunge, wie sie z.B. in den DE-OS 15 70 533 und 15 95 762 sowie in der US-PS 3 544 514 beschrieben sind, nämlich vorzugsweise dreiwertige Phenole, aromatische Tricarbonsäuren und Hydroxycarbonsäuren mit mindestens drei funktionellen Gruppen. Beispiele bevorzugter Verzweigungsmittel sind
2,4-Bis-(4-hydroxyphenyl-isopropyl)-phenol,
2,6-Bis-(2'-hydroxy-5'-methylbenzyl)-4-methylphenol,
2-(4-Hydroxyphenyl)-2-(2,4-dihydroxyphenol)-propan,
1,4-Bis-(4,4'-dihydroxytriphenyl-methyl)benzol,
2,4-Dihydroxybenzoesäure, Trimesinsäure, Cyanurchlorid,
3,3-Bis-(4-hydroxy-phenyl)-2-oxo-2,3-dihydroindol sowie 3,3-Bis-(4-hydroxy-3-methyl-phenyl)-2-oxo-2,3-dihydroindol.

Wenn die Blockcokondensate A in verzweigter Form eingesetzt werden sollen, beträgt die Menge verzweigender Gruppen in der Regel 0,05 bis 2 Mol.%, bezogen auf die Diphenolreste des Blockcokondensats A.

Bevorzugte Endgruppen für die Blockcokondensate A sind Reste von Phenol, Benzoesäure, Mono-und Dialkylphenolen und Mono-und Dialkylbenzoesäuren, deren Alkylsubstituenten insgesamt bis zu 20 C-Atomen pro Endgruppe enthalten können. Besonders bevorzugte Endgruppen entsprechen der Formel

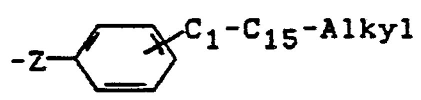

(V)

worin

Z -O-oder - $\underset{\underset{O}{\|}}{C}$ -bedeutet.

Beispiele bevorzugter Endgruppen sind die Reste von Phenol, p-tert.-Butyl-phenol, p-Isooctyl-phenol, p-Nonyl-phenol, 3,5-Di-tert.-butyl-phenol, 2-(3,5-Dimethylheptyl)-phenol und 4-(3,5-Dimethylheptyl)-phenol.

Anstelle der freien Phenole können deren Halogenkohlensäureester, anstelle der Carbonsäuren ihre Säurechloride eingesetzt werden.

Die Menge der Endgruppen beträgt vorzugsweise 1 bis 10 Mol-%, bezogen auf die Diphenolreste des Blockcokondensats A.

Die Herstellung der Blockcokondensate A kann beispielsweise aus $\alpha$, $\omega$-Bis(hydroxyaryloxy)-polydiorganosiloxanen, Bisphenolen, Kohlensäurederivaten, z.B. Phosgen, gegebenenfalls Kettenabbrechern und gegebenenfalls Verzweigungsmittels nach dem Zweiphasengrenzflächenverfahren unter üblichen Bedingungen erfolgen. Auch das Umesterungs-und das sog. Pyridinverfahren sind zur Herstellung geeignet.

Die Zahl der Siliciumatome pro Einheit (= mittlere Siloxanblocklänge) kann man für den Fall der eigenen Herstellung durch Bestimmung der Endgruppen am Polysiloxan-Ausgangsmaterial ermitteln. Andernfalls wird die Bestimmung der Siloxanblockanläge am fertigen Blockcokondensat durch Verseifung des Polycarbonatanteils möglich. Der nicht verseifbare Siloxanblock wird so der polymeranalytischen Untersuchung (GPC, HPLC, Endgruppenanalytik) zugänglich.

Aromatische Polyester B im Sinne der Erfindung sind Reaktionsprodukte aus aromatischen $C_8$-$C_{14}$-Dicarbonsäuren oder ihren reaktionsfähigen Derivaten (z.B. Dimethylestern oder Anhydriden), und aliphatischen, cycloaliphatischen, araliphatischen oder aromatischen Diolen mit bis zu 21 C-Atomen, wobei diese Dicarbonsäuren und/oder diese Diole ganz oder teilweise durch sulfongruppenhaltige Dicarbonsäuren oder Diole ersetzt wird.

Bevorzugte Sulfongruppen-haltige Diole sind Diarylsulfone mit Hydroxyalkylgruppen, welche bis 50, vorzugsweise 16 bis 30, C-Atome und 1 bis 6, vorzugsweise 1 oder 2, Sulfongruppen pro Molekül enthalten.

Bevorzugte Diarylsulfongruppen-haltige Diolreste entsprechen der Formel

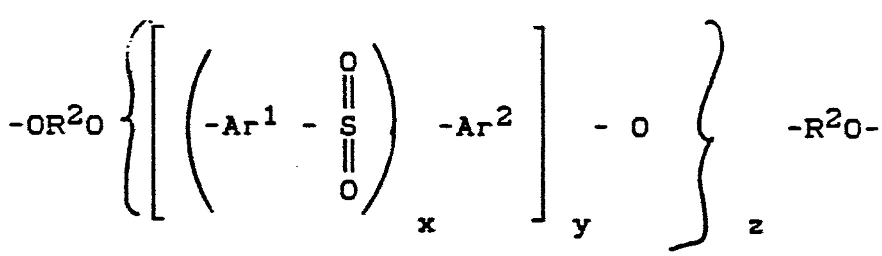

(VI)

worin

x eine ganze Zahl von 1 bis 6,

y eine ganze Zahl von 1 bis 4, vorzugsweise 1 oder 2,

z eine ganze Zahl von 1 bis 6, vorzugsweise 1 oder 2,

$R^2$ $-CH_2-CH_2-$,

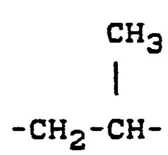

oder einen Polyethylenether-oder Polypropylenetherrest mit 2 bis 10 wiederkehrenden Alkylengruppen,
$Ar^1$, $Ar^2$ unabhängig voneinander

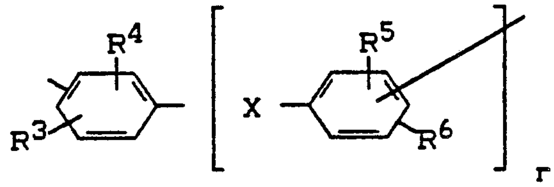

r Null oder 1,
$R^3$ -$R^6$ $C_1$-$C_4$-Alkyl, Halogen, vorzugsweise Chlor oder Brom, insbesonder aber Wasserstoff, und

- X- 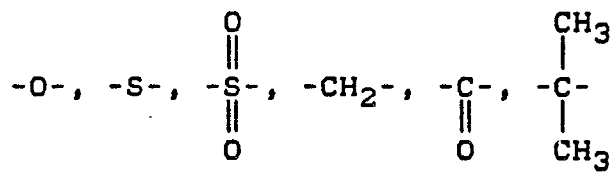

oder eine Einfachbindung bedeuten.

Besonders bevorzugte Diarylsulfongruppen-haltige Diolreste entsprechen der Formel

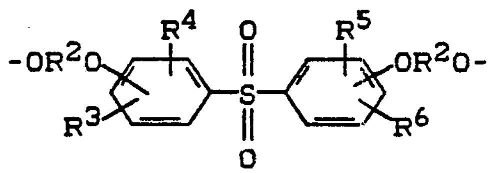 (VII)

worin
die Reste $R^2$ bis $R^6$ die oben angegebene Bedeutung haben.

Beispiele bevorzugter Diarylsulfongruppen-haltiger Diolreste sind

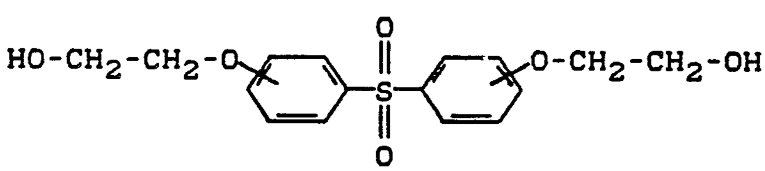 (VIII)

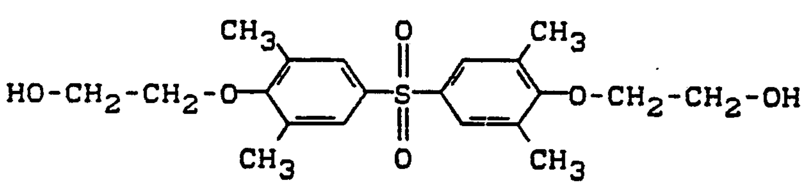 (IX)

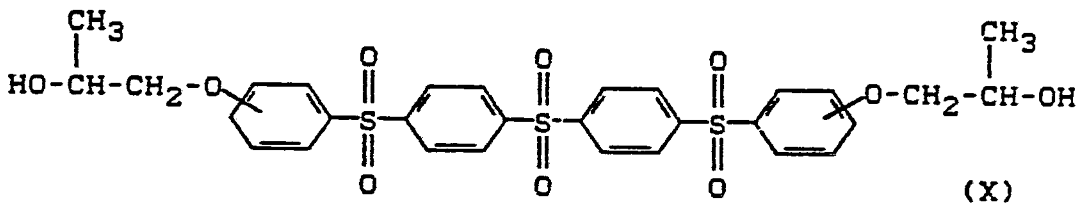
(X)

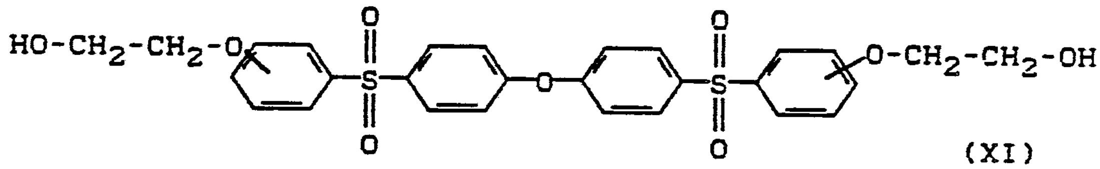
(XI)

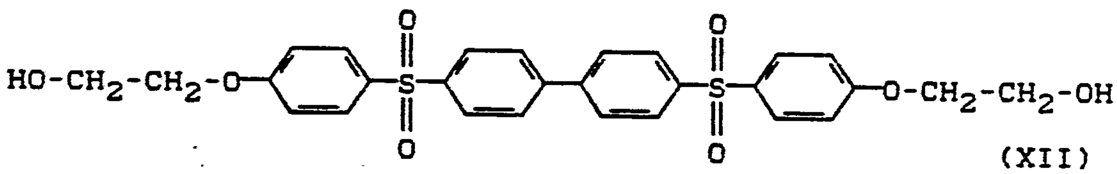
(XII)

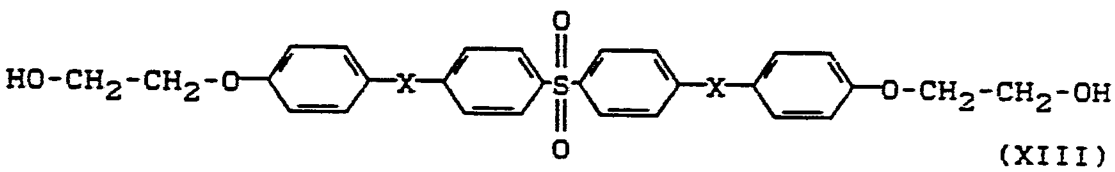
(XIII)

mit X = -O-, -S-, 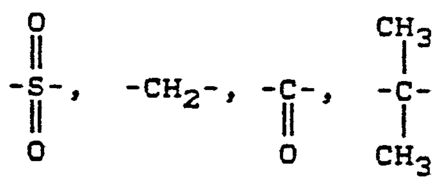

oder eine Einfachbindung.

Neben Diarylsulfongruppen-haltigen Diolresten gegebenenfalls vorhandene andere Diolreste sind z.B. die Reste von Ethylenglykol, Propandiol-1,2-und -1,3 Butandiol-1,4, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di(β-hydroxyethoxy)-ben zol, 2,2-Bis-(4-hydroxycyclohexyl)-propan, 2,4-Dihydroxy-1,1,3,3-tetramethylcyclobutan, 2,2-Bis-(3-β-hydroxyethoxy-phenyl)-propan und 2,2-Bis-(4-hydroxypropoxy-phenyl)-propan.

In Polyestern B gegebenenfalls enthaltene Diarylsulfongruppen-freie Diolreste bestehen vorzugsweise zu mindestens 80 Mol.-%, insbesondere zu mindestens 90 Mol.-%, besonders bevorzugt aber vollständig aus Ethylenglykol-und/oder Butandiol-1,4-resten.

Bevorzugte aromatische Dicarbonsäuren zur Herstellung der Polyester B sind beispielsweise Phthalsäure, Isophthalsäure, Naphthalin-2,6-dicarbonsäure, 4,4'-Diphenyldicarbonsäure, insbesondere Terephthalsäure.

Bevorzugte Sulfongruppen-haltige aromatische Dicarbonsäuren sind beispielsweise Diphenylsulfondicarbonsäuren der Formel

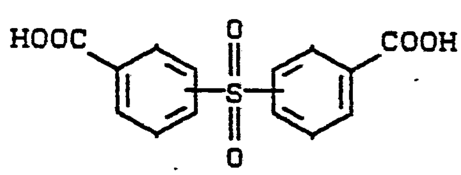
(XIV)

Diese Säuren sind bekannt (vgl. Beilstein, 2. Ergänzungswerk, Bd. 10, S. 109) oder können analog bekannten Verfahren hergestellt werden.

Bevorzugte Polyester B enthalten mindestens 80 Mol.-%, bezogen auf sämtliche Dicarbonsäurereste, Diphenylsulfon-dicarbonsäure-und Terephthalsäurereste und höchstens 20 Mol-% Reste anderer aromatischer $C_8$-$C_{14}$-Dicarbonsäuren oder aliphatischer $C_4$-$C_{12}$-Dicarbonsäuren oder cycloaliphatischer oder araliphatischer $C_8$-$C_{14}$-Dicarbonsäuren, wie z.B. Reste der Bernsteinsäure, Adipinsäure, Sebacinsäure, Azelainsäure und Cyclohexandiessigsäure.

Die Polyester B können durch Einbau relativ kleiner Mengen 3-oder 4-wertiger Alkohole oder 3-oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Die kautschukelastischen Polymerisate C umfassen Copolymerisate - insbesondere Pfropfcopolymerisate - mit kautschukelastischen Eigenschaften, die im wesentlichen aus mindestens 2 der folgenden Monomeren erhältich sind: Butadien-1,3, Styrol, Acrylnitril und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind.

Besonders bevorzugte Polymerisate C sind Pfropfpolymerisate.

Bevorzugte Pfropfpolymerisate C besitzen mittlere Teilchendurchmesser $d_{50}$ von 0,05 bis 1, vorzugsweise von 0,1 bis 0,8, insbesondere von 0,2 bis 0,6 $\mu$m.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) bestimmt werden.

Die Pfropfpolymerisate C sind vorzugsweise vernetzt und haben Gelgehalte von mindestens 50 Gew.-%, vorzugsweise mindestens 80 Gew.-% und insbesondere von mindestens 90 Gew.-%, bezogen auf Pfropfpolymerisat C.

Der Gelgehalt der vernetzten Dienkautschuke wird bei 25° C in Toluol, der Gelgehalt der vernetzten Acrylatkautschuke bei 25°C in Dimethylformamid bestimmt (M. Hoffmann, H. Krömer, R. Kuhn, Polymeranalytik I und II, Georg Thieme Verlag Stuttgart 1977).

Bevorzugte Pfropfpolymerisate C sind Pfropfpolymerisate von 15 bis 60, vorzugsweise 20 bis 50, insbesondere 25 bis 40 Gew.-% wenigstens eines Vinyl-oder Vinylidenmonomeren aus der Reihe Styrol, $\alpha$-Methylstyrol, Acrylnitril, $C_1$-$C_8$-Alkylacrylat, $C_1$-$C_8$-Alkylmethacrylat, Hydroxy-$C_2$-$C_8$-alkyl(meth)acrylat, Epoxy-$C_2$-$C_8$-alkyl(meth)acrylat auf 40 bis 85, vorzugsweise 50 bis 80, insbesondere 60 bis 75 Gew.-% teilchenförmigen vernetztem Dien-oder Acrylatkautschuk, jeweils bezogen auf Pfropfpolymerisat C.

Bevorzugte Pfropfmonomere sind Methylmethacrylat sowie Mischungen aus Styrol und Methylmethacrylat und Mischungen aus Styrol und Acrylnitril.

Bevorzugte Dienkautschuke sind vernetzte Homo-und/oder Copolymerisate aus konjugierten $C_4$-$C_6$-Dienen. Bevorzugtes Dien ist Butadien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl-oder Methacrylsäure mit einwertigen $C_1$-$C_4$-Alkoholen, wie z.B. Methylacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage Bd. 19, Verlag Chemie, Weinheim, 1981, S. 279 bis 284, beschrieben.

Bevorzugte Pfropfgrundlagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Die Acrylatkautschuke sind vernetzt.

Bevorzugte Beispiele für vernetzende Monomere mit mehr als einer copolymerisierbaren Doppelbindung sind Ester ungesättigter $C_3$-$C_{12}$-Monocarbonsäuren und ungesättigter einwertiger $C_2$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di-und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Als Komponente C zu verwendende Acrylat-und Butadienkautschuke werden in der Literatur beschrieben; vgl. z.B. DE-OS 16 94 173, 22 48 242, 23 10 034, 23 57 406, DE-PS 24 44 584 = US-PS 40 22 748, DE-OS 27 26 256 = US-PS 40 96 202, US-PS 38 08 180, EP-A 56 243.

Bevorzugte Polymerisate C sind ferner die sogenannten EPM-bzw. EPDM-Kautschuke, in denen das Gewichtsverhältnis von Ethylen-zu Propylenresten im Bereich von 40 : 60 bis 90 : 10, vorzugsweise 40 : 60 bis 65 : 35, liegt.

Derartige EPM-bzw. EPDM-Kautschuke sind z.B. in der DE-OS 28 08 709 beschrieben.

Bevorzugte Polymerisate C sind auch gegebenenfalls selektiv hydrierte Blockcopolymerisate eine vinylaromatischen Monomeren X und eines konjugierten Diens Y vom X-Y-Typ oder X-(Y-X-(Y-X)$_r$-Typ (mit r = 1-5) oder Y-(X)$_s$-Typ (mit s = 3-5).

Diese Blockcopolymerisate können nach bekannten Verfahren hergestellt werden. Im allgemeinen kann für die Herstellung der geeigneten X-Y-Blockcopolymerisate aus Styrol, α-Methylstyrol, Vinyltoluol usw. und aus konjugierten Dienen, wie Butadien, Isopren usw., die für die Herstellung von Styrol-Dienblockcopolymerisaten verwendete Technologie benutzt werden, die in "Encyclopedia of Polymer Science and Technology", Bd. 15, Interscience, N.Y. (1971), auf den Seiten 508 ff. beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben. Derartige selektiv hydrierte Blockpolymerisate werden z.B. in der DE-OS 3 000 282 beschrieben.

Die erfindungsgemäßen Mischungen können die für Polycarbonate und/oder Polyester üblichen Additive, wie Gleit-und Entformungsmittel, Nukleiermittel, Stabilisatoren, Füll-und Verstärkungsstoffe, Flammschutzmittel und/oder Farbstoffe enthalten.

Die gefüllten bzw. verstärkten Mischungen können bis zu 30 Gew.-%, bezogen auf die verstärkte Mischung, Füll-und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxide, Wollastonit.

Die mit Flammschutzmitteln ausgerüsteten Mischungen enthalten Flammschutzmittel in einer Konzentration von im allgemeinenweniger als 30 Gew.-%, bezogen auf die flammgeschützten Mischungen.

Es kommen die für Polycarbonate bzw. Polyester bzw. kautschukelastische Polymerisate bekannten Flammschutzmittel in Frage, wie z.B. Polytetrafluorethylen, Polyhalogendiphenyl, Polyhalogendiphenylether, Polyhalogenphthalsäure und ihre Derivate und Polyhalogenoligo-und polycarbonate, wobei die entsprechenden Bromverbindungen besonders wirksam sind. Außerdem enthalten sie in der Regel einen Synergisten, wie z.B. Antimontrioxid.

Zur Erhöhung der Wärmestandfestigkeit kann man den erfindungsgemäßen Mischungen z.B. bis zu 5 Gew.-%, bezogen auf A + B + C, Tetramethylbisphenol-A-Polycarbonat zusetzen.

In einer bevorzugten Ausführungsform enthalten die erfindungsgemäßen Mischungen wirksame Mengen Stabilisator, um die unerwünschte Umesterung der Komponenten A und B untereinander möglichst weitgehend zu verhindern.

Um festzustellen, ob eine gegebene Stabilisatormenge die unerwünschte Umesterung wirksam unterdrückt, empfiehlt sich folgende Methode: Auf einer Knetmaschine werden die Komponenten A und B - vorzugsweise in Granulatform -zusammen mit dem Stabilisator 15 Minuten lang bei 60 U/Min. und einer Temperatur von 300° C gemischt. Der in Dichlormethan bei 25° C lösliche Anteil der so erhaltenen Mischung wird mittels NMR-Spektroskopie auf Umesterung untersucht; vgl. J. Defaux, P. Godard, J. P. Mercier, J. Polym. Sci., Polym. Physicx Ed., 20, 1881 - 1894 (1982). Liegt der so bestimmte Umesterungsgrad unter 5 Mol-%, bezogen auf die im Unterschuß vorhandene Komponente, so wird die geprüfte Stabilisatormenge als "wirksam" im Sinne der Erfindung eingestuft.

Welche Verbindungen Umesterungen verhindern können, ist dem Fachmann bekannt. Sie umfassen beispielsweise Phosphorsäure, phosphorige Säure und deren aliphatische, aromatische oder araliphatische Ester, z.B. Alkylester mit 6 bis 18 C-Atomen in der Alkoholkomponente, Phenylester, deren Phenylreste gegebenenfalls mit 1 - 3 Substituenten mit 6 bis 18 C-Atomen substituiert sind, wie Trinonylphenyl-,

Dodecylphenyl-und Triphenylphosphat; Arsenverbindungen wie Arsen(III)-und Arsen(V)-oxid; Borsäurederivate; Acetessigsäureester. Eine Übersicht über diese Art von Stabilisatoren findet sich bei H. Ludewig, Polyesterfasern, 2. Auf., Akademie-Verlag, Berlin 1974. Erfindungsgemäß besonders bevorzugte Stabilisatoren sind beispielsweise:

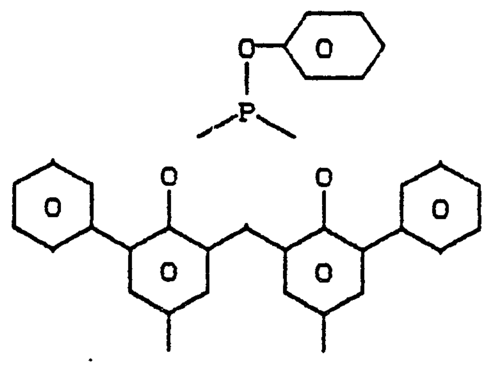

(XV)

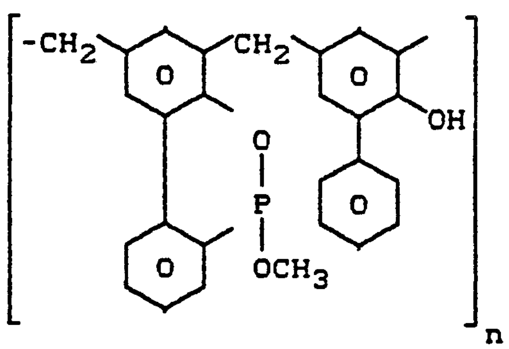

(XVI)

n = 1 - 10

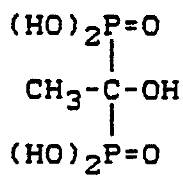

(XVII)

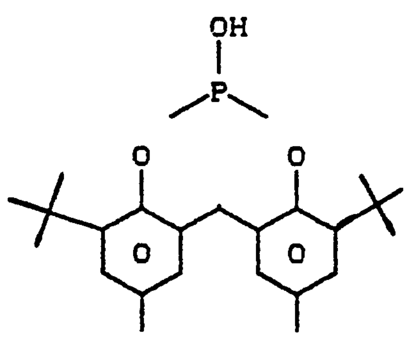

(XVIII)

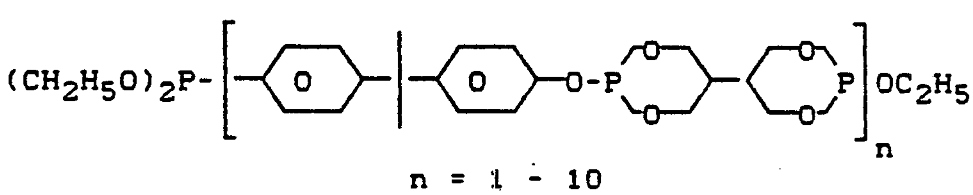

n = 1 - 10

(XIX)

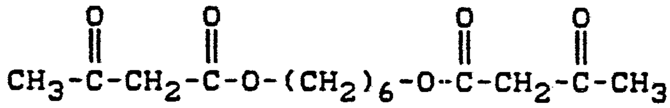

(XX)

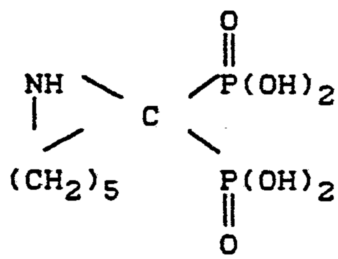

(XXI)

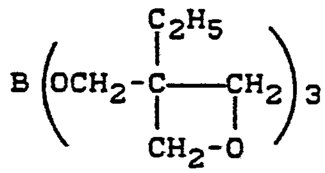

(XXII)

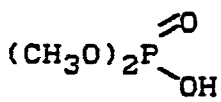

(XXIII)

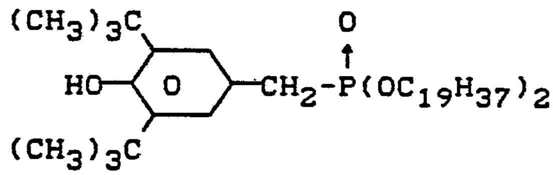

(XXIV)

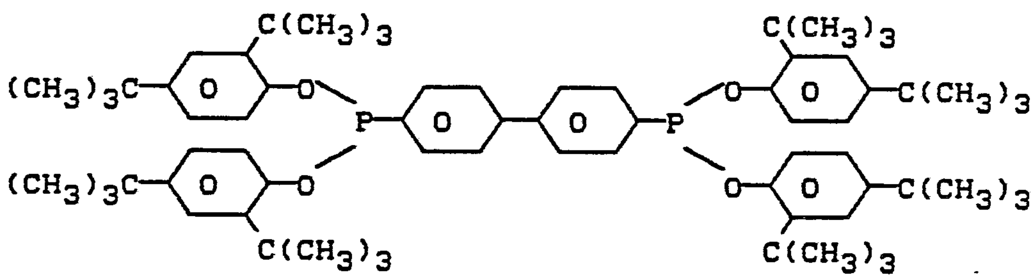

(XXV)

Das Mischen der Komponenten kann auf üblichen Kunststoffverarbeitenden Aggregaten, wie Walzen, Knetern oder Schneckenextrudern, durchgeführt werden.

Weiterer Gegenstand der Erfindung ist also ein Verfahren zur Herstellung der erfindungsgemäßen Mischungen durch Mischen der Komponenten in der Schmelze, vorzugsweise bei Temperaturen von 250 bis 320°C.

Die erfindungsgemäßen Mischungen eignen sich z.B. zur Herstellung von Stoßstangen, Rammleisten und Radkappen für Kraftfahrzuge.

Weiterer Gegenstand der Erfindung ist also die Verwendung der Mischungen zur Herstellung von Formkörpern.

Die in den nachfolgenden Beispielen vorkommenden Prozentangaben beziehen sich auf das Gewicht; Teile sind Gewichtsteile.

Beispiele

Verwendete Komponenten:

Ia. Polydimethylsiloxan-Polycarbonat-Blockcokondensat:

In ein Gefäß, das mit Kühler, Thermometer, Tropftrichter und Rührer versehen war, gab man 39,7 Teile Bisphenol A und 1800 Teile Chlorbenzol. Es wurde auf 100° C erwärmt und mit 24,1 Teilen Kaliumcarbonat versetzt. Danach gab man unter Rückfluß über eine Zeit von 15 Minuten eine Lösung von 178 Teilen α,ω-Bisacetoxypolydimethylsiloxan, $P_n$ = 40, in 178 Teilen Chlorbenzol zu, wobei das Rühren für zwei weitere Stunden fortgesetzt wurde. Es wurde auf etwa 80° C abgekühlt und noch heiß filtriert.

Diese Lösung von Polydimethylsiloxan mit Bisphenol A-Endgruppen wurde in einem Reaktionskolben, der mit Rührer, Phosgeneinlaßrohr, Rückflußkühler, Innenthermometer und Tropfrichter ausgerüstet war, mit 3035 Teilen Bisphenol A, 3024 Teilen Natriumhydroxid, 34700 Teilen Wasser, 17800 Teilen Dichlormethan und 13100 Teilen Chlorbenzol sowie 45,1 Teilen Phenol versetzt.

Bei Raumtemperatur wurden 2216 Teile Phosgen eingeleitet, wobei der pH-Wert durch Zugabe 45 %iger wäßriger Natronlauge zwischen 12 und 13 gehalten wurde. Das Einleiten dauerte ca. eine Stunde. Danach wurden 11 Teile Triethylamin zugesetzt und weitere 45 Minuten bei pH 12 bis 13 nachgerührt. Das Cokondensat wurde wie üblich aufgearbeitet.

Die Bestimmung des Siloxangehaltes des Blockcokondensats erfolgte durch Kernresonanzspektroskopie. Als mittlere Siloxanblocklänge wurde der durch Bestimmung der Endgruppen am Polysiloxan-Ausgangsmaterial ermittelte Polymerisationsgrad n angegeben.

Die relative Lösungsviskosität wurde bei 25° C und einer Konzentration von 5 g/l in Dichlormethan im Ubbelohde-Viskosimeter gemessen.

Die relative Lösungsviskosität betrug 1,295; der Siloxangehalt betrug 5,1 %.

Ib. Das Herstellungsverfahren für Ia. wurde wiederholt mit den Ausnahmen, daß Polysiloxan vom Polymerisationsgrad n = 84 und als Kettenabbrecher 125,5 Teile 4-(1,1,3,3-Tetramethylbutyl)-phenol eingesetzt wurden.

Die relative Lösungsviskosität, gemessen wie für Ia., betrug 1,248; der Siloxangehalt betrug 4,9 %.

Ic. Das Herstellungsverfahren für Ib. wurde wiederholt mit der Ausnahme, daß als Kettenabbrecher 164,7 Teile 4-(1,1,3,3-Tetramethylbutyl)-phenol eingesetzt wurden.

Die relative Lösungsviskosität, gemessen wie für Ia., betrug 1,200; der Siloxangehalt betrug 5,3 %.

II. Polybutylenterephthalat, hergestellt aus Terephthalsäuredimethylester und Butandiol-1,4, mit einer Intrinsic-Viskosität von 1,20 dl/g, gemessen in Phenol/o-Dichlorbenzol (Gew.-Verhältnis 1:1) bei 25° C im Ubbelohde-Viskosimeter.

III. Copolybutylenterephthalat mit 10 % 4,4'-Bishydroxyethoxy-diphenylsulfon:

In einem ölbeheizten 25-l-Stahlautoklaven mit Rührer, Vakuum-Destillationsaufsatz und Boden-Ablaßvorrichtung wurden unter Stickstoff-Atmosphäre bei Raumtemperatur folgende Komponenten vorgelegt:

4,66 kg (24 Mol) Dimethylterephthalat,

0,529 kg (1,56 Mol) 4,4'-Bishydroxyethoxy-diphenylsulfon (10 %, bez. auf III),

2,89 kg (32 Mol) Butandiol und

2,73 g Titantetraisopropylat.

Das Reaktionsgemisch wurde innerhalb von 2 Stunden unter Stickstoff-Atmosphäre auf 190° C erhitzt, dann weitere 2 Stunden bei 190° C und 1 Stunde bei 200° C gerührt. Nach beendeter Umesterung wurde in der Oligokondensationsstufe innerhalb 1 - 2 Stunden der Druck auf ca. 1 Torr vermindert und die Reaktionstemperatur von 200° C auf 260° C gesteigert, wobei Butandiol abdestillierte.

Unter weiterer Druckverminderung auf ca. 0,3 Torr wurde das mittelviskose Vorkondensat innerhalb ca. 1 Stunde bei 260° C unter Butandiolabspaltung polykondensiert.

Die Polyesterschmelze wurde in Wasser abgesponnen und granuliert.

Die relative Lösungsviskosität des trockenen Granulates wurde in einer Konzentration von 0,5 g/100 ml Lösungsmittelgemisch aus Phenol/o-Dichlorbenzol (1 : 1) im Ubbelohde-Viskosimeter bei 25° C bestimmt: $\eta_{rel} \triangleq 1{,}521$.

Zur Erhöhung der Viskosität wurde das Granulat einer Festphasen-Nachkondensation unterworfen, die in einem Vakuum-Trockenschrank bei 200° C, 0,5 Torr in 20 Stunden durchgeführt wurde: $\eta_{rel}$ 1,745 = Intrinsic-Viskosität 1,22 dl/g.

IV. Pfropfpolymerisat, hergestellt aus 80 % Propfgrundlage aus vernetztem Polybutadien (Gelgehalt über 70 %, gemessen in Toluol) und 20 % Pfropfauflage aus Methylmethacrylat.

Herstellung der Formmassen:

Die Komponenten wurden in einem Zweiwellenextruder unter Stickstoffatmosphäre bei Temperaturen von 320° C aufgeschmolzen und homogenisiert. Der Schmelzestrang wurde vor dem Austritt aus der Düse entgast, in Wasser abgekühlt, granuliert und getrocknet. Die Verarbeitung erfolgte bei 270° C Massetemperatur auf einer Spritzgießmaschine.

Alle Zusammensetzungen enthalten zusätzlich 0,1 Teile eines Phosphitstabilisators.

**Tabelle 1**

| Beispiel Nr. | Komponenten (Teile) Ia | II | III | IV | Kerbschlagzähigkeit n. Izod (J/m)[1] RT | 0° C | -10° C | -20° C | -30° C | -40° C |
|---|---|---|---|---|---|---|---|---|---|---|
| 1[xx)] | 60 | 40 | | | 131 | 116 | | 114 | | |
| 2[xx)] | 60 | | 40 | | 990[x] | 177 | | 157 | | |
| 3 | 54 | 36 | | 10 | 873* | | | 685* | 625* | 270 |
| 4 | 54 | | 36 | 10 | 866* | | | 719* | | 5* x 547*<br>5* x 276 |

* = duktiles Bruchverhalten

1) gemessen nach ASTM D 256 an 3.2 mm starken Prüfkörpern

xx) Die für Beispiele 1 und 2 eingesetzte Komponente I a enthielt lediglich 2.1 % Siloxan (analytisch über NMR-Spektroskopie).

Tabelle 2

| Beispiel Nr. | Komponenten (Teilen) Ib | Ic | II | III | IV | Kerbschlagzähigkeit n. Izod (J/m)[1] RT | $0^{0}$ C | $-10^{0}$ C | $-20^{0}$ C | $-30^{0}$ C | $-40^{0}$ C |
|---|---|---|---|---|---|---|---|---|---|---|---|
| 5 | 54 | | 36 | | 10 | 829* | | | 668* | 602* | 324 |
| 6 | 54 | | | 36 | 10 | 839* | | | 721* | | 6 x 578*<br>4 x 377 |
| 7 | | 54 | 36 | | 10 | 788* | 666* | 570* | 268 | | |
| 8 | | 54 | | 36 | 10 | 823* | | | 622* | 7 x 545*<br>3 x 359 | |

1) gemessen nach ASTM D 256 an 3,2 mm starken Prüfkörpern

* = duktiles Bruckverhalten

## Ansprüche

1. Thermoplastische Mischungen aus

A. 10 bis 98 Gew.-% Polycarbonatpolydiorganosiloxan-Blockcokondensat mit einer relativen Viskosität (gemessen an einer Lösung von 0,5 g Blockcokondensat in 100 ml Dichlormethan bei 25° C) von mindestens 1.15, einem Gehalt an Poly(diorganosiloxan)-einheiten von 2,5 bis 25 Gew.-%, bezogen auf

Komponente A, Poly-(diorganosiloxan)-einheiten, wobei diese Poly-(diorganosiloxan)-einheiten im Mittel 5 bis 120 Siliciumatome pro Einheit enthalten,

B. 2 bis 90 Gew.-% aromatischem Polyester mit einer Intrinsic-Viskosität (gemessen in Phenol/o-Dichlorbenzol (1:1 Gewichtsteile) bei 25° C) von mindestens 0,6 dl/g und

C. 0 bis 30 Gew.-% kautschukelastichem Polymerisat mit einer Glasübergangstemperatur von unter -20° C, wobei sich die Prozentangaben, wenn nicht anders angegeben, auf die Summe der Komponenten A und B beziehen,

dadurch gekennzeichnet, daß die Polyesterkomponente B. 0.5 bis 21 Gew.-%, bezogen auf B, Sulfongruppen enthält.

2. Mischungen nach Anspruch 1, dadurch gekennzeichnet, daß das Blockcokondensat A eine relative Viskosität von 1.18 bis 1.32 besitzt.

3. Mischungen nach Ansprüchen 1 und 2, dadurch gekennzeichnet, daß der Gehalt des Blockcokondensats A an Poly-(diorganosiloxan)-einheiten 5 bis 20 Gew.-% beträgt.

4. Mischungen nach Ansprüchen 1 bis 3, dadurch gekennzeichnet, daß die Poly-(diorganosiloxan)-einheiten des Blockcokondensats A im Mittel 10 bis 100 Siliciumatome pro Einheit enthalten.

5. Mischungen nach Ansprüchen 1 bis 4, dadurch gekennzeichnet, daß der aromatische Polyester B eine Intrinsic-Viskosität von 0,7 bis 1,3 dl/g besitzt.

6. Verfahren zur Herstellung der Mischungen nach Ansprüchen 1 bis 5 durch Mischen der Komponenten in der Schmelze.

7. Verwendung der Mischungen nach Ansprüchen 1 bis 5 zur Herstellung von Formkörpern.